# EUROPÄISCHE PATENTSCHRIFT

(11) **EP 0 750 139 B1**
(45) Veröffentlichungstag und Bekanntmachung des Hinweises auf die Patenterteilung: **21.11.2001**
(21) Anmeldenummer: 96109655.9
(22) Anmeldetag: 15.06.1996
(51) Int. Cl.: F16H 59/46, F16H 61/08

(54) **Adaptive Lastschaltsteuerung**
Adaptive shift control
Système de commande de changement de rapport auto-adaptif

(30) Priorität: 23.06.1995 DE 19522834
(43) Veröffentlichungstag der Anmeldung: 27.12.1996
(73) Patentinhaber: ZF FRIEDRICHSHAFEN Aktiengesellschaft, 88038 Friedrichshafen (DE)
(72) Erfinder: Thorenz, Frank, 88677 Markdorf (DE)

(56) Entgegenhaltungen:
- EP-A- 0 411 558
- EP-A- 0 414 547
- US-A- 4 742 461
- US-A- 5 309 790
- US-A- 5 343 782

## Beschreibung

Die Erfindung betrifft ein Verfahren zur Optimierung einer Überschneidungssteuerung eines Lastschaltgetriebes und eine Überschneidungssteuerung eines Lastschaltgetriebes selbst.

Aus der europäischen Offenlegungsschrift EP 0 520 530 A1 ist ein Schaltverfahren eines automatischen Kraftfahrzeuggetriebes bekannt, bei dem im Schaltmoment das Drehmoment des Motors durch einen entsprechenden Eingriff in die Motorsteuerung so weit reduziert wird, so daß das Durchgehen der Turbinendrehzahl im Schaltmoment ("flare") weitgehend vermieden wird. Aufgrund der Rücknahme des Drehmomentes im Schaltmoment ergibt sich jedoch eine kurzfristige Reduktion der Leistungsübertragung, wobei auch gleichzeitig eine Kenntnis des momentanen Leistungszustandes des Antriebsmotors notwendig ist, um bestimmen zu können, wie weit die Antriebsleistung zurückgenommen werden muß.

Die europäische Patentanmoldung EP 0 411 558 offenbart eine Überschneidungssteuerung und ein Steuerverfahren eines Lastschaltgetriebes gemäß den Oberbegriffen der Ansprüche 1 und 5.

Aufgabe der vorliegenden Erfindung ist es, eine Überschneidungssteuerung eines Lastschaltgetriebes darzustellen, das ohne Eingriff in die Motorsteuerung auskommt und weiterhin ein Verfahren darzustellen, womit eine Optimierung einer Überschneidungssteuerung eines Lastschaltgetriebes durchgeführt wird.

Die Aufgabe wird durch die Merkmale des ersten Vorrichtungs- bzw. des ersten Verfahrensanspruches gelöst.

Eine einfache Methode, um Zugkraftunterbrechungen beim Schaltvorgang zwischen zwei Übersetzungen eines Getriebes zu vermeiden, ist die Überschneidungsschaltung eines Lastschaltgetriebes. Hierbei kommt ein Getriebe zum Einsatz, das antriebsseitig eine Wandlerturbine aufweist und bei dem abtriebsseitig zwei Stränge mit jeweils einer oder mehreren Übersetzungen vorgesehen sind, die abtriebsseitig abwechselnd durch jeweils zugeordnete Kupplungen angekoppelt werden. Beim Schaltvorgang überträgt die erste Kupplung K1 die Getriebeeingangslast noch so lange, bis der Druck an der zweiten Kupplung K2 so weit angestiegen ist, daß diese das volle Drehmoment übernehmen und die erste Kupplung nach einer gewissen Überschneidungszeit d_t gelöst werden kann.

Ist die Überschneidungszeit zu kurz oder negativ, so besteht Momentengleichheit zwischen Turbinenmoment und Getriebeeingangsmoment mit der Folge, daß die Turbinendrehzahl kurzfristig ansteigt (flare). Ist die Überschneidungszeit dagegen zu groß, so macht sich dies als Momentensprung am Antrieb bemerkbar und wird als Schaltruck unangenehm wahrgenommen.

Für einen begrenzten Betriebsbereich läßt sich die Überschneidungszeit d_t hinreichend genau vorberechnen bzw. durch Versuche vorbestimmen und einstellen. Jedoch hat sich gezeigt, daß die Überschneidungszeit für ein optimales Schaltverhalten von vielen weiteren Faktoren, wie z. B. der Beladung des Fahrzeuges, dem Verschleißzustand der Antriebselemente und der Getriebeeingangslast, abhängig ist, wodurch eine optimale Einstellung der Überschneidungszeiten über lediglich ein (herstellerseitiges) vorgegebenes Kennfeld sehr schwierig ist.

Erfindungsgemäß wird eine Überschneidungssteuerung vorgeschlagen, die sich während des Betriebes selbständig bezüglich der Überschneidungszeit optimiert.

Grundlage für die Optimierung ist die Messung der Getriebeeingangslast, die entweder direkt oder über die Differenzdrehzahl (Schlupf) zwischen Getriebeeingang (vor dem Wandlereingang) und Getriebeausgang bestimmt wird, wobei die Bestimmung der Differenzdrehzahl auf jeden Fall notwendig ist.

Zunächst wird dem Getriebe eine bestimmte, eventuell last- oder schlupfabhängige Überschneidungszeit d_t,0 und ein erwünschtes "flare" d_n,soll vorgegeben. Im Betrieb werden dann bei den ersten Schaltvorgängen diese Überschneidungszeiten so lange iterativ in Abhängigkeit von den jeweiligen Lastzuständen variiert und abgespeichert, bis ein Kennfeld an last- bzw. schlupfabhängigen Überschneidungszeiten vorliegt, bei denen sich die gewünschte Größe des "flare" einstellt bzw. möglichst weit nähert.

Zur Durchführung der Optimierung eignen sich grundsätzlich alle im Bereich der numerischen Mathematik bekannten, iterativen Maßnahmen. Ein einfaches Verfahren besteht darin, nach jeder Schaltung die maximale Differenzdrehzahl an der abschaltenden Kupplung d_n1,max mit der Solldifferenzdrehzahl, dem Soll-"flare", d_n1,soll zu vergleichen. Ist d_n1,max höher als die Vorgabe, so wird die Überschneidungszeit um ein Inkrement dt verlängert oder umgekehrt. Der entsprechende Wert wird im Speicher für das Kennfeld abgelegt, wobei auch jedesmal eine Anpassung des Inkrementes dt in Abhängigkeit vom Abstand zum Sollwert vorgenommen werden kann. Nach jedem Schaltvorgang wird diese Anpassung wiederholt, bis der gemessene Wert d_n1,max im vorgegebenen Bereich von d_n1,soll liegt.

Erfindungsgemäß können auch Zwischenwerte für unterschiedliche Lastzustände interpoliert werden.

Das optimierte Kennfeld wird nun dazu verwendet, als neue Vorgabe für die Überschneidungszeiten d_t zu dienen, wobei erfindungsgemäß die Möglichkeit besteht, den Optimierungslauf weiterhin aktiv zu halten und damit laufend eine Anpassung an Änderungen durch eventuellen Verschleiß der Antriebsteile zu erhalten. Es entsteht auf diese Weise eine adaptive Lastschaltsteuerung.

Für eine noch bessere Anpassung kann auch vorgesehen werden, die Überschneidungszeit zusätzlich in bezug auf die absolute Drehzahl der Wandlerturbine zu optimieren.

Die Erfindung ist anhand der Figuren näher beschrieben. Darin ist im übrigen folgendes dargestellt:
- Fig. 1: schematische Darstellung eines Antriebstranges mit Lastschaltgetriebe;
- Fig. 2: Darstellung von Kupplungsdruck an den Kupplungen beim Schaltvorgang;
- Fig. 3: Darstellung der zum Kupplungsdruck Korrelierten Differenzdrehzahl an der abschaltenden Kupplung.

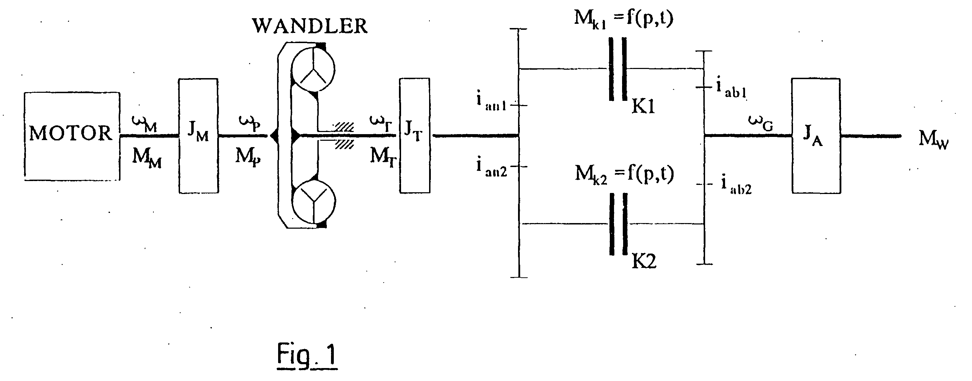

Fig. 1 zeigt eine schematische Darstellung eines beispielhaften Antriebsstranges mit Lastschaltgetriebe. Es besteht aus dem Motor mit dem ihm eigenen Trägheitsmoment J_M; dem mit dem Motor fest verbundenen Wandler und seinem eigenen Trägheitsmoment J_T; danach folgenden, zwei parallelen Schaltkupplungen K1 und K2 mit ihren vor- und nachgeordneten Übersetzungsstufen i_an1, i_ab1 und i_an2, i_ab2 und einem abtriebsseitigen Trägheitsmoment J_A. Ein Gangwechsel wird beispielsweise durch Druckbeaufschlagung der hydraulischen Zuschaltkupplung K2 und Druckabnahme an der Abschaltkupplung K1 durchgeführt. Es besteht auch die Möglichkeit, pneumatische oder elektromagnetische Kupplungen zu verwenden. Wird eine Betätigung der Kupplungen so durchgeführt, daß beide Kupplungen über längere Zeit gleichzeitig voll belastet sind, so entsteht aufgrund der unterschiedlichen Übersetzung eine schädliche Verspannung; werden die Kupplungen so bedient, daß beide Kupplungen gleichzeitig gelöst sind, so wird keine Kraft übertragen. Der Schaltvorgang selbst wird durch eine entsprechende (nicht dargestellte) Steuerung entsprechender Sensoren übernommen, die vorzugsweise auf elektronischen Elementen basiert.

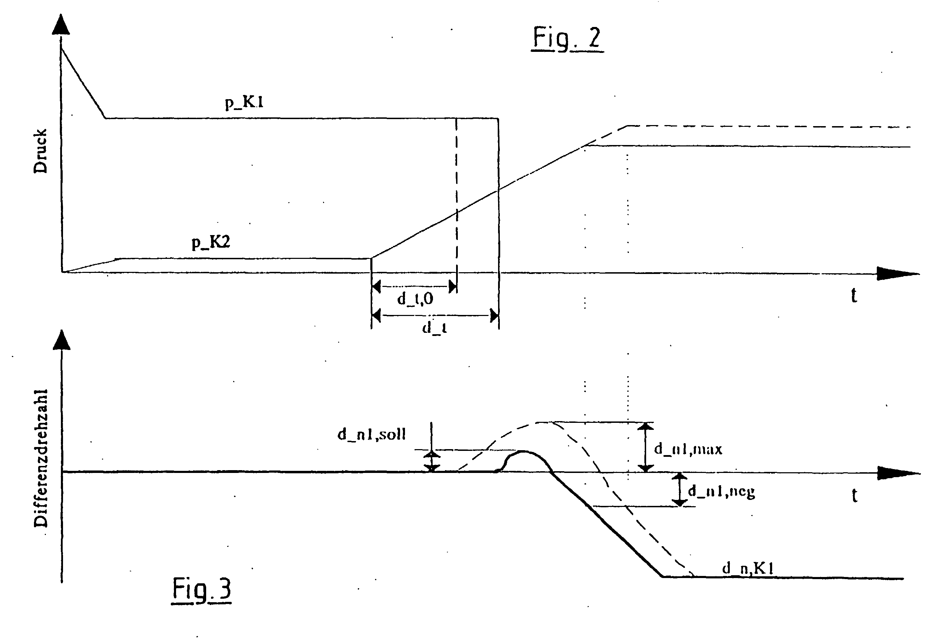

Fig. 2 zeigt eine Darstellung von Kupplungsdruck an der abschaltenden Kupplung beim Schaltvorgang des Getriebes aus Fig. 1. Die Druckkurve zeigt die sich während des Schaltens ändernden Druckwerte p_K1 und p_K2 an den Kupplungen K1 und K2, während in der darunterliegenden Darstellung gemäß Fig. 3 der Verlauf der entsprechenden Differenzdrehzahl gezeigt ist. Wird mit einer zu kurzen Überschneidungszeit d_t,0 geschaltet (gestrichelte Linie), so entsteht ein relativ großes "flare", also ein Durchgehen der Turbinendrehzahl. Bei einem optimalen Schaltvorgang ergibt sich ein Differenzdrehzahlverlauf entsprechend der durchgezogenen Linie, bei dem ein geringes, jedoch vorhandenes "flare" auftritt, das zu einem als angenehm empfundenen, unterbrechungsfreien Schaltvorgang führt.

Erfindungsgemäß wird die Schaltung nun derart optimiert, daß zur Überschneidungssteuerung des Lastschaltgetriebes in der Steuereinheit ein Kennfeld abgelegt wird, in dem eine vorgegebene Überschneidungszeit d_t zwischen dem ersten und zweiten Schaltelement in Abhängigkeit von der am Getriebe anliegenden Belastung angegeben ist, in der Steuereinheit eine optimale Überschwingdifferenzdrehzahl d_n1,soll abgelegt ist und die Überschneidungszeit d_t in Abhängigkeit von der aktuellen Belastung des Getriebes - die direkt oder durch Messung der Drehzahldifferenz zwischen Ein- und Ausgang des Wandlers bestimmt sein kann - durch iteratives Optimieren so eingestellt wird, daß sich die optimale Überschwingdifferenzdrehzahl ("flare") d_n1,soll einstellt.

Erfindungsgemäß können die ermittelten Überschneidungszeiten d_t, die die vorgegebene optimale Überschwingdifferenzdrehzahl d_n1,soll annähern, in einem weiteren, optimierten Kennfeld gespeichert werden und die neuen Werte der Steuerung für die Überschneidungszeit d_t bilden.

Alternativ können auch die ermittelten Überschneidungszeiten d_t, die die vorgegebene optimale Überschwingdifferenzdrehzahl d_n1,soll annähern, das bestehende Kennfeld überschreiben und damit direkt die neuen Werte der Steuerung für die Überschneidungszeit d_t bilden.

Gemäß dem oben dargestellten Verfahren beinhaltet eine Überschneidungssteuerung zur Durchführung des oben dargestellten Verfahrens mindestens einen triebseitigen Eingangsstrang, eine Wandlerturbine, mindestens ein erstes und ein zweites Schaltelement mit je einem Kupplungselement, mindestens einen abtriebsseitigen Ausgangsstrang, eine Steuereinheit zur Steuerung des Schaltvorganges, mindestens ein Meßglied zur Erfassung der anliegenden Last bzw. des anliegenden Schlupfes am Wandler, eine Speichereinheit mit einem abgelegten Kennfeld, in dem eine vorgegebene Überschneidungszeit d_t zwischen dem ersten und zweiten Schaltelement in Abhängigkeit von der am Getriebe anliegenden Belastung angegeben ist, einen weiteren Speicher, in dem eine optimale Überschwingdifferenzdrehzahl d_n1,soll abgelegt ist, und eine Recheneinheit, die die Überschneidungszeit d_t in Abhängigkeit von der aktuellen Belastung des Getriebes durch iteratives Optimieren so einstellt, daß sich die optimale Überschwingdifferenzdrehzahl d_n1,soll ergibt.

Ebenfalls kann ein weiterer Speicher vorgesehen sein, in dem die gemessenen Überschneidungszeiten d_t, die die vorgegebene optimale Überschwingdifferenzdrehzahl d_n1,soll annähern, in einem weiteren, optimierten Kennfeld gespeichert werden und die neue Vorgabe der Steuerung für die Überschneidungszeit d_t bilden.

Alternativ kann die Steuerung auch dazu geeignet sein, die gemessenen Überschneidungszeiten d_t, die die vorgegebene optimale Überschwingdifferenzdrehzahl d_n1,soll annähern, im bestehenden Kennfeld zu überschreiben und die die neue Vorgabe der Steuerung für die Überschneidungszeit d_t bilden.

Bei herkömmlichen Lösungen wird nach dem Abschalten der ersten Kupplung der Druck der zweiten Kupplung über eine Rampenfunktion weiter hochgefahren, bis die zweite Kupplung schließt. Erfindungsgemäß kann auch vorgesehen werden, den Druck an der ersten Kupplung konstant zu lassen, wenn ein Druckniveau erreicht ist, das dem Getriebeeingangsmoment zuzüglich eines dynamischen Moments entspricht. Hat die zweite Kupplung das volle Moment von der ersten Kupplung übernommen, so beobachtet man, daß die Differenzdrehzahl an der ersten Kupplung vom positiven in den negativen Bereich übergeht. Dies bedeutet, daß der Druck an der Kupplung groß genug ist, um das Getriebemoment zu übertragen und zusätzlich einen dynamischen Anteil besitzt, der eine Drehzahldifferenzumkehr an der Turbine bewirkt. Es kann daher bei Erreichen einer negativen Drehzahldifferenz d_n1,neg ein weiterer Druckanstieg an der zweiten Kupplung unterbunden und der momentane Druck gehalten werden. Hierdurch ergibt sich eine wesentlich bessere Schaltqualität während der Synchronphase der Schaltung.

### Bezugszeichen

- J_A: abtriebsseitiges Trägheitsmoment
- J_M: Trägheitsmoment des Motors
- J_T: Trägheitsmoment des Wandlers
- K1: Schaltkupplung
- K2: Schaltkupplung
- i_ab1: Übersetzungsstufe
- i_an1: Übersetzungsstufe
- i_ab2: Übersetzungsstufe
- i_an2: Übersetzungsstufe
- p_K1: Druckwert an Kupplung K1
- p_K2: Druckwert an Kupplung K2
- d_t: Überschneidungszeit
- d_n1: Überschwingdifferenzdrehzahl
- d_n1,max: maximale Überschwingdifferenzdrehzahl
- d_n1,soll: Solldifferenzdrehzahl
- d_n1, neg: negative Drehzahldifferenz

## Patentansprüche

1. Überschneidungssteuerung eines Lastschaltgetriebes mit:
mindestens einem triebseitigen Eingangsstrang;
einer Wandlerturbine;
mindestens einem ersten und einem zweiten Schaltelement;
je einem Kupplungselement pro Schaltelement;
mindestens einem abtriebsseitigen Ausgangsstrang;
einer Steuereinheit zur Steuerung des Schaltvorganges;
mindestens je einem Meßglied zur Erfassung der anliegenden
Last und der Eingangsdrehzahl der abschaltenden Kupplung;
einer Speichereinheit mit einem abgelegten Kennfeld, in dem eine vorgegebene Überschneidungszeit d_t zwischen dem ersten und zweiten Schaltelement in Abhängigkeit von der am Getriebe anliegenden Belastung angegeben ist, **gekennzeichnet durch** ein weiteres Meßglied zur Erfassung der Ausgangsdrehzahl der abschaltenden Kupplung;
einen weiteren Speicher, in dem eine optimale Überschwingdifferenzdrehzahl d_n1,soll abgelegt ist;
eine Recheneinheit, die die Überschneidungszeit d_t in Abhängigkeit von der aktuellen Belastung des Getriebes **durch** iteratives Optimieren so einstellt, daß sich die optimale Überschwingdifferenzdrehzahl d_n1,soll einstellt.

2. Überschneidungssteuerung gemäß Anspruch 1, **dadurch gekennzeichnet, daß** zur Messung des Lastzustandes mindestens zwei Drehzahlsensoren vorgesehen sind, die die Drehzahldifferenz zwischen Ein- und Ausgang des Wandlers bestimmen.

3. Überschneidungssteuerung gemäß einem der Ansprüche 1 bis 2, **dadurch gekennzeichnet, daß** ein weiterer Speicher vorgesehen ist, in dem die ermittelten Überschneidungszeiten d_t, die die vorgegebene optimale Überschwingdifferenzdrehzahl d_n1,soll annähern, in einem weiteren, optimierten Kennfeld gespeichert werden und die neue Vorgabe der Steuerung für die Überschneidungszeit d_t bilden.

4. Überschneidungssteuerung gemäß einem der Ansprüche 1 bis 2, **dadurch gekennzeichnet, daß** die ermittelten Überschneidungszeiten d_t, die die vorgegebene optimale Überschwingdifferenzdrehzahl d_n1,soll am öffnenden Schaltelement annähern, das bestehende Kennfeld überschreiben und die neue Vorgabe der Steuerung für die Überschneidungszeit d_t bilden.

5. Verfahren zur Optimierung einer Überschneidungssteuerung eines Lastschaltgetriebes mit mindestens einem triebseitigen Eingangsstrang, einer Wandlerturbine, mindestens einem ersten und einem zweiten Schaltelement mit je einem Kupplungselement, mindestens einem abtriebsseitigen Ausgangsstrang und einer Steuereinheit mit einem abgelegten Kennfeld, in dem eine vorgegebene Überschneidungszeit d_t zwischen dem ersten und zweiten Schaltelement in Abhängigkeit von der am Getriebe anliegenden Belastung angegeben ist, **dadurch gekennzeichnet, daß**
in der Steuereinheit eine optimale Überschwingdifferenzdrehzahl d_n1,soll am öffnenden Schaltelement abgelegt ist; die maximale Überschwingdifferenzdrehzahl gemessen wird und mit d_n1, soll verglichen wird; die Überschneidungszeit d_t in Abhängigkeit von der aktuellen Belastung des Getriebes durch iteratives Optimieren so eingestellt wird, daß sich die optimale Überschwingdifferenzdrehzahl d_n1,soll einstellt.

6. Verfahren gemäß Anspruch 5, **dadurch gekennzeichnet, daß** der Lastzustand durch die Messung der Drehzahldifferenz zwischen Ein- und Ausgang des Wandlers und durch Auswertung der Leistungsaufnahme- und Drehmomentverstärkungskennlinien des Wandlers bestimmt wird.

7. Verfahren gemäß einem der Ansprüche 5 bis 6, **dadurch gekennzeichnet, daß** die ermittelten Überschneidungszeiten d_t, die die vorgegebene optimale Überschwingdifferenzdrehzahl d_n1,soll annähern, in einem weiteren, optimierten Kennfeld gespeichert werden und die neuen Werte der Steuerung für die Überschneidungszeit d_t bilden.

8. Verfahren gemäß einem der Ansprüche 5 bis 6, **dadurch gekennzeichnet, daß** die ermittelten Überschneidungszeiten d_t, die die vorgegebene optimale Überschwingdifferenzdrehzahl d_n1,soll annähern, das bestehende Kennfeld überschreiben und die neuen Werte der Steuerung für die Überschneidungszeit d_t bilden.

9. Verfahren gemäß einem der Ansprüche 5 bis 8, **dadurch gekennzeichnet, daß** der maximal notwendige Schaltdruck an der zweiten (neuen) Kupplung während der Synchronphase anhand der Differenzdrehzahl an der ersten (alten) Kupplung eingestellt wird.

## Claims

1. Overlapping control of a powershift transmission with:
at least one input drive line;
one converter turbine;
at least one first and one second shift element;
one clutch element per shift element;
at least one output drive line;
one control unit for shift process control;
at least one measuring sensor each to record load and
input speed of the disengaging clutch;
one memory unit with filed characteristics containing a specified overlap time d_t between first and second shift element relating to the load present on the transmission,
**characterized**
**by** another measuring sensor to record the output speed of the disengaging clutch;
another memory containing an optimum overshooting differential speed d_n1;
a computing device to set overlap time d_t in relation to the current transmission load by means of iterative optimization in a manner that the optimum overshooting differential speed d_n1 nominal results.

2. Overlapping control according to claim 1,
**characterized**
**in that** the load condition is measured by at least two speed sensors which determine the differential speed between converter input and output.

3. Overlapping control according to one of the claims 1 and 2,
**characterized**
**in that** another memory is provided, in which the determined overlapping times d_t, which approach the specified optimum overshooting differential speed d_n1 nominal, are stored in another, optimized characteristics field and constitute the new specification for the control of the overlap time d_t.

4. Overlapping control according to one of the claims 1 and 2,
**characterized**
**in that** the determined overlap times d_t, which approach the specified optimum overshooting differential speed d_n1 nominal on the opening shift element, overwrite the existing characteristics and constitute the new control specification for the overlap time d_t.

5. Method for optimizing overlapping control of a powershift transmission with at least one input drive line, one converter turbine, at least a first and second shift element with one clutch element each, at least one output drive line and one control unit containing a characteristics field, which contains a specified overlap time d_t between first and second shift element in relation to the load present on the transmission,
**characterized**
**in that** an optimum overshooting differential speed d_n1 nominal is filed in the control unit for the opening shift element; the maximum overshooting differential speed is measured and compared with d_n1 nominal; the overlap time d_t in relation to the current transmission load is set by iterative optimization in a way that the optimum overshooting differential speed d_n1 nominal setting results.

6. Method according to claim 5,
**characterized**
**in that** the loading condition is determined by measurement of the speed difference between converter input and output and through evaluation of converter input and torque multiplication characteristics.

7. Method according to one of the claims 5 and 6,
**characterized**
**in that** the determined overlap times d_t, which approach the specified optimum overshooting differential speeds, are stored in another optimized characteristics field and constitute the new control values for the overlap time d_t.

8. Method according to one of the claims 5 and 6,
**characterized**
**in that** the determined overlap times d_t, which approach the specified optimum overshooting differential speeds, overwrite the existing characteristics field and constitute the new control values for the overlap time d_t.

9. Method according to any one of the claims 5 to 8,
**characterized**
**in that** the maximally required shifting pressure on the second (new) clutch during synchronization is set in relation to the differential speed on the first (old) clutch.

## Revendications

1. Commande à chevauchement d'une transmission à transfert de charge, comprenant ;
au moins une chaîne cinématique d'entrée côté entraînement ;
une turbine de convertisseur ;
au moins un premier et un deuxième élément de commutation ;
un élément d'embrayage par éléments de commutation ;
au moins une chaîne cinématique de sortie côté sortie ;
une unité de commande pour la commande de l'opération de commutation ;
au moins un organe de mesure pour relever la charge appliquée et la vitesse de rotation d'entrée de l'embrayage qui débraye ;
une unité de mémoire contenant un diagramme caractéristique enregistré, dans lequel un temps de chevauchement prédéterminé d_t entre le premier élément de commutation et le deuxième élément de commutation est indiqué en fonction de la charge appliquée à la transmission, **caractérisé par**
un organe de mesure additionnel destiné à relever la vitesse de sortie de l'embrayage qui débraye;
une mémoire additionnelle dans laquelle est enregistrée une vitesse de rotation différentielle de chevauchement optimale d_n1,soll ;
une unité de calcul qui règle le temps de chevauchement d_t en fonction de la charge actuelle de la transmission par optimisation itérative de telle manière qu'il s'établisse la vitesse de rotation différentielle de chevauchement optimale d_n1, soll.

2. Commande à chevauchement selon la revendication 1, **caractérisée en ce que**, pour la mesure de l'état de charge, il est prévu au moins deux capteurs de vitesse de rotation qui déterminent la différence de vitesse de rotation entre l'entrée et la sortie du convertisseur.

3. Commande à chevauchement selon la revendication 1 à 2, **caractérisée en ce qu'**il est prévu une mémoire supplémentaire dans laquelle les temps de chevauchement d_t obtenus, qui s'approchent de la vitesse de rotation différentielle de suroscillation d_n1,soll optimale prédéterminée sont mémorisés dans un diagramme caractéristique supplémentaire, optimisé et forment la nouvelle consigne de la commande pour le temps de chevauchement d_t.

4. Commande à chevauchement selon l'une des revendications 1 à 2, **caractérisée en ce que** les temps de chevauchement d_t obtenus, qui s'approchent de la vitesse de rotation différentielle de suroscillation d_n1,soll optimale prédéterminée sur l'élément de commutation qui s'ouvre écrasent le diagramme caractéristique existant et forment la nouvelle consigne de la commande pour le temps de chevauchement d_t.

5. Procédé d'optimisation d'une commande à chevauchement d'une transmission à commutation de la charge comprenant au moins une chaîne cinématique d'entrée côté entraînement, une turbine de convertisseur, au moins un premier et un deuxième élément de commutation ayant chacun un élément d'embrayage, au moins une chaîne cinématique de sortie côté sortie, et une unité de commande contenant un diagramme caractéristique enregistré dans lequel est indiqué un temps de chevauchement d_t prédéterminé entre le premier et le deuxième élément de commutation en fonction de la charge appliquée à la transmission, **caractérisée en ce que**
une vitesse de rotation différentielle de suroscillation d_n1,soll optimale sur l'élément de commutation est enregistrée dans l'unité de commande, la vitesse de rotation différentielle de suroscillation maximale est mesurée et comparée à d_n1,soll, le temps de chevauchement d_t est réglé en fonction de la charge actuelle de la transmission par optimisation itérative de telle manière qu'il s'établisse la vitesse de rotation différentielle de chevauchement optimale d_n1, soll.

6. Procédé selon la revendication 5, **caractérisé en ce que** l'état de charge est déterminé par la mesure de la différence de vitesse de rotation entre l'entrée et la sortie du convertisseur et par l'analyse des caractéristiques d'absorption de puissance et d'amplification du couple du convertisseur.

7. Procédé selon l'une des revendications 5 à 6, **caractérisé en ce que** les temps de chevauchement d_t obtenus, qui s'approchent de la vitesse de rotation différentielle de suroscillation optimale d_n1, soll prédéterminée sont mémorisés dans un diagramme optimisé, et forment les nouvelles valeurs pour la commande du temps de chevauchement d_t.

8. Procédé selon l'une des revendications 5 à 6, **caractérisé en ce que** les temps de chevauchement d_t obtenus qui s'approchent de la vitesse de rotation différentielle de suroscillation d_n1,soll optimale prédéterminée écrasent le diagramme caractéristique existant et forment les nouvelles valeurs de la commande pour le temps de chevauchement d_t.

9. Procédé selon l'une des revendications 5 à 8, **caractérisé en ce que** la pression de commutation nécessaire maximale sur le deuxième (nouvel) embrayage pendant la phase de synchronisation est réglée sur la base de la vitesse de rotation différentielle sur le premier (ancien) embrayage.
